# EUROPEAN PATENT APPLICATION

(11) **EP 4 475 553 A1**
(43) Date of publication of application: **11.12.2024**
(21) Application number: 24177285.4
(22) Date of filing: 22.05.2024
(51) Int. Cl.: H04N 23/67, H04N 23/611

(54) **VIDEO PROCESSING APPARATUS AND METHOD, IMAGE CAPTURING APPARATUS, VIDEO DISTRIBUTION SYSTEM, PROGRAM AND STORAGE MEDIUM**

(30) Priority: 07.06.2023 JP 2023094236
(71) Applicant: CANON KABUSHIKI KAISHA, Tokyo 146-8501 (JP)
(72) Inventor: TOMOSADA, Toshihiko, Tokyo, 146-8501 (JP); YOKOZEKI, Makoto, Tokyo, 146-8501 (JP)
(74) Representative: TBK

(57) **Abstract**

A video processing apparatus comprising: detection means configured to detect a predetermined subject or subjects from video obtained from image capturing means that repeatedly shoots and outputs video; acquisition means configured to acquire information on at least one partial area set in the video obtained from the image capturing means; and determination means configured to determine a main subject based on a priority of each subject within the partial area from among the subject or subjects detected by the detection means.

## Description

### BACKGROUND OF THE INVENTION

### Field of the Invention

The present invention relates to a video processing apparatus and method, image capturing apparatus, video distribution system, program and storage medium.

### Description of the Related Art

In video distribution systems that distribute video to remote locations, it is commonly known to use a cropping function that distributes images based on signals read out from pixels in a partial region rather than from all effective pixels among a plurality of pixels that constitute an image sensor. This cropping function makes it possible to distribute a video shot by a camera that excludes areas unnecessary to the user.

On the other hand, there are many cameras, that can be used in the video distribution system described above, equipped with a function to detect a person's face from captured video and adjust the focus and exposure to the detected person's face (subject). When using this function in a video distribution system equipped with a cropping function, it is important that the subject to which focus and exposure are adjusted exists in the video being distributed.

Japanese Patent Laid-Open No. 2006-33291 proposes a method in which a subject to which focus and exposure is adjusted is to be included in the video recording area by recording video of an area corresponding to the subject determined based on the results of measurement operations such as photometry among subjects detected from the entire range of the video.

However, in the case of the method described in Japanese Patent Laid-Open No. 2006-33291, if the area of the video to be recorded or distributed is determined based on the area corresponding to the subject determined based on the results of measurement operations such as photometry, there is a possibility that the obtained video will be different from the video that the user wants to distribute.

### SUMMARY OF THE INVENTION

The present invention has been made in consideration of the above situation, and distributes an area of the video that the user wants to distribute while improving the possibility that a subject to which focus and exposure are adjusted will be included in the distributed video.

The present invention in its first aspect provides a video processing apparatus as specified in claims 1 to 13.

The present invention in its second aspect provides an image capturing apparatus as specified in claims 14 to 16.

The present invention in its third aspect provides a video distribution system as specified in claim 17.

The present invention in its fourth aspect provides a video processing method as specified in claim 18.

The present invention in its fifth aspect provides a program as specified in claim 19.

The present invention in its sixth aspect provides a computer readable storage medium as specified in claim 20.

Further features of the present invention will become apparent from the following description of exemplary embodiments (with reference to the attached drawings).

### BRIEF DESCRIPTION OF THE DRAWINGS

The accompanying drawings, which are incorporated in and constitute a part of the specification, illustrate embodiments of the invention, and together with the description, serve to explain the principles of the invention.
FIG. 1 is a block diagram showing a configuration of a video distribution system according to an embodiment of the present invention.
FIGS. 2A to 2E are diagrams for explaining problems in a video distribution system and a method for setting a main face according to a first embodiment.
FIGS. 3A and 3B are graphs for explaining a method of calculating priority in main face selection.
FIG. 4 is a flowchart of main face selection processing in the first embodiment.
FIG. 5 is a flowchart of priority calculation process for each face in the first embodiment.
FIGS. 6A to 6E are diagrams for explaining a method for setting a main face according to a second embodiment.
FIG. 7 is a flowchart of main face selection processing in the second embodiment.
FIG. 8 is a flowchart of priority calculation process for each face in the second embodiment.

### DESCRIPTION OF THE EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### • Configuration of Video Distribution System

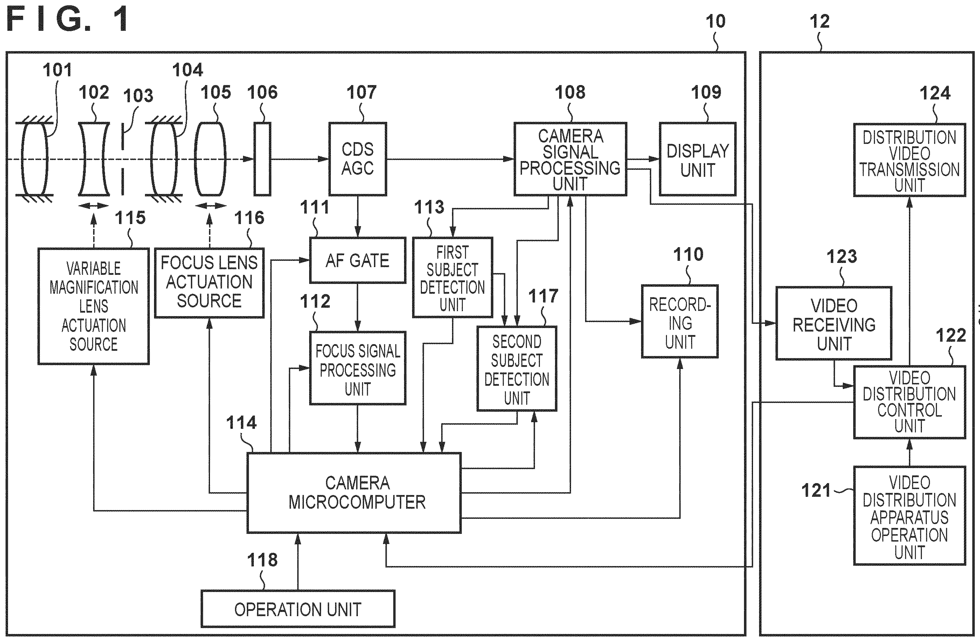

FIG. 1 is a block diagram showing the configuration of a video distribution system that distributes video according to an embodiment of the present invention. The video distribution system includes an image capturing apparatus 10 and a distribution apparatus 12. In this embodiment, a case will be described in which the distribution device 12 is a device configured separately from the camera, such as a PC, but the image capturing apparatus 10 and the distribution apparatus 12 may be configured integrally.

### [Configuration of Image Capturing Apparatus]

In this embodiment, a case will be described in which the image capturing apparatus 10 is a video camera. Note that the present invention is not limited to video cameras, but can also be applied to other image capturing apparatuses such as digital still cameras.

In FIG. 1, an imaging optical system includes a first fixed lens 101, a variable magnification lens 102, an aperture 103, a second fixed lens 104, and a focus lens 105. The variable magnification lens 102 is a variable magnification lens that can change its magnification power by being moved in the optical axis direction. The focus lens 105 has both a general focus adjustment function and a function to correct shifting of the focal plane due to zooming, and adjusts the focus state of the light incident through the imaging optical system on the light receiving surface of an image sensor 106.

The image sensor 106 is formed with a CCD sensor, a CMOS sensor, or the like, and outputs an analog signal by photoelectrically converting an optical image formed on the light receiving surface via the imaging optical system. A CDS/AGC/AD converter 107 performs sampling, gain adjustment, and analog-to-digital conversion processing on the analog signal output from the image sensor 106, and outputs an obtained digital signal. A camera signal processing unit 108 performs various image processing on the digital signal output from the CDS/AGC/AD converter 107 to generate a video signal.

A display unit 109 displays the video signal from the camera signal processing unit 108. A recording unit 110 records the video signal from the camera signal processing unit 108 on a recording medium such as a magnetic tape, an optical disk, a semiconductor memory, or the like. Further, the video signal generated by the camera signal processing unit 108 is also output to a video receiving unit 123 of the distribution apparatus 12.

An AF gate 111 is used to pass only the digital signal corresponding to an area for focus detection among the digital signal of all pixels output from the CDS/AGC/AD converter 107. Note that the AF gate 111 outputs the digital signal corresponding to the area (within an AF frame) set by a camera microcomputer 114 as described later to a focus signal processing unit 112.

The focus signal processing unit 112 generates a focus detection signal from the digital signal that has passed through the AF gate 111 and sends it to the camera microcomputer 114. Note that the focus detection signal may be a value representing the sharpness (contrast state) of the video or, if the digital signal is a pair of signals with parallax, may be the distance to the subject or a value representing a defocus amount determined from the phase difference.

A first subject detection unit 113 performs known subject detection processing on the video signal of all pixels output from the camera signal processing unit 108, and detects the position, size, and angle (roll, pitch, and yaw) of the object in the screen. Note that various known methods may be used for detecting a person's face in the subject detection processing. For example, there is a method of extracting a skin color area based on the color tone of each pixel represented by image data and detecting a face based on the degree of matching with a face contour template prepared in advance, and a method of performing pattern recognition using detected facial feature points, such as eyes, nose and mouth. Furthermore, by using a method such as machine learning, not only a person's face, but also eyes, torso, and subjects other than people, such as animals and vehicles may be detected by using parameters adjusted in advance. The first subject detection unit 113 transmits the detection result to the camera microcomputer 114 and a second subject detection unit 117, which will be described later.

The second subject detection unit 117 receives the detection results represented by the detected position and size of the subject detected by the first subject detection unit 113, and based on the received detection results and the video signal from the camera signal processing unit 108, a known subject detection processing accompanied by subject tracking is performed. Then, the obtained subject detection results are transmitted to the camera microcomputer 114. The subject detection processing performed by the second subject detection unit 117 includes, for example, a known method that performs pattern matching or histogram matching on the current frame by using an image of the subject area based on the detection results of past frames as a template, and determines an area with a high degree of matching as a subject area. Further, the subject area may be determined by considering not only the template image but also the defocus amount.

The camera microcomputer 114 determines the subject in the current frame based on the results received from the first subject detection unit 113 and the second subject detection unit 117. Here, a method will be described in which the camera microcomputer 114 determines the subject in the current frame from the determination results of the first subject detection unit 113 and the second subject detection unit 117.

Since the first subject detection unit 113 detects the subject using the video signal, accuracy regarding the position and size of the subject is higher than the second subject detection unit 117. On the other hand, detection accuracy tends to decrease in a case where the shape of the subject changes significantly, such as in a case where the subject faces left, right, up or down, or in a case where there is an obstacle.

On the other hand, the second subject detection unit 117 performs pattern matching and histogram matching based on the template image to detect a subject, so compared to the first subject detection unit 113, it can determine a position of the subject even in a case where the shape of the subject changes or there is an obstacle. On the other hand, the accuracy of the position and size of the subject is low because it may be affected by the color and brightness of the surroundings of the subject.

In consideration of the above, in a case where the same subject is detected by first subject detection unit 113 and the second subject detection unit 117, if the reliability of the detection result by the first subject detection unit 113 is equal to or greater than a threshold, the detection result of first subject detection unit 113 is adopted. On the other hand, if the reliability of the detection result is less than the threshold, the detection result of the second subject detection unit 117 is adopted. However, the method of selecting the result described above is merely an example, and the subject area may be specified based on the detection results of both the first subject detection unit 113 and the second subject detection unit 117, depending on the situation.

Then, the camera microcomputer 114 sets the main subject among the subjects detected as described above using the method described later, sets an AF frame in an area including the subject area of the main subject, and sends the information to the AF gate 111. Then, the focus signal processing unit 112 performs focus adjustment control based on the focus detection signal generated using the digital signal that has passed through the AF gate 111. Further, exposure may be controlled based on the subject area set here.

Furthermore, the camera microcomputer 114 controls a focus lens actuation source 116 to actuate the focus lens 105 based on the focus detection signal output from the focus signal processing unit 112. Further, the camera microcomputer 114 outputs an image recording command to the recording unit 110. Note that these processes are repeatedly executed by the camera microcomputer 114 at predetermined intervals (for example, the generation cycle of a vertical synchronization signal of a video signal).

Further, the camera microcomputer 114 receives information regarding the area whose video is being distributed by the distribution apparatus 12 from a video distribution control unit 122 which will be described later.

A variable magnification lens actuation source 115 includes an actuator for moving the variable magnification lens 102 and its driver circuit, and the focus lens actuation source 116 includes an actuator for moving the focus lens 105 and its driver circuit. Further, the actuators of the variable magnification lens actuation source 115 and the focus lens actuation source 116 each includes a stepping motor, a DC motor, a vibration type motor, a voice coil motor, and so forth.

An operation unit 118 includes operation members such as a touch panel, a joystick, a switch, a button, etc., and receives user operations and transmits the operation contents to the camera microcomputer 114.

### [Configuration of Distribution Apparatus]

Next, the distribution apparatus 12 in this embodiment will be explained.

As shown in FIG. 1, the distribution apparatus 12 includes a video distribution apparatus operation unit 121, the video distribution control unit 122, the video receiving unit 123, and a distribution video transmission unit 124.

The video distribution apparatus operation unit 121 is a member for the user to operate the distribution apparatus 12, and the operation of the distribution apparatus 12 can be changed by using the video distribution apparatus operation unit 121. The video distribution apparatus operation unit 121 may be a hardware member or a software member. Further, the video distribution apparatus operation unit 121 may be a member that is shared with the operation unit 118, and in that case, the video distribution control unit 122 receives operation information from the camera microcomputer 114.

The video distribution control unit 122 changes the operation of the distribution apparatus 12 according to the operation from the video distribution apparatus operation unit 121, and controls the video to be transmitted by the distribution video transmission unit 124. Furthermore, the video distribution control unit 122 transmits information regarding which area of the received video is being distributed (hereinafter referred to as "distribution information") to the camera microcomputer 114.

The video receiving unit 123 receives video from the camera signal processing unit 108 and passes it to the video distribution control unit 122.

The distribution video transmission unit 124 receives from the video distribution control unit 122 a part or all of the video received from the video receiving unit 123 based on the distribution information set by the video distribution control unit 122, and distributes it to the outside.

### •Problems in Video Distribution System

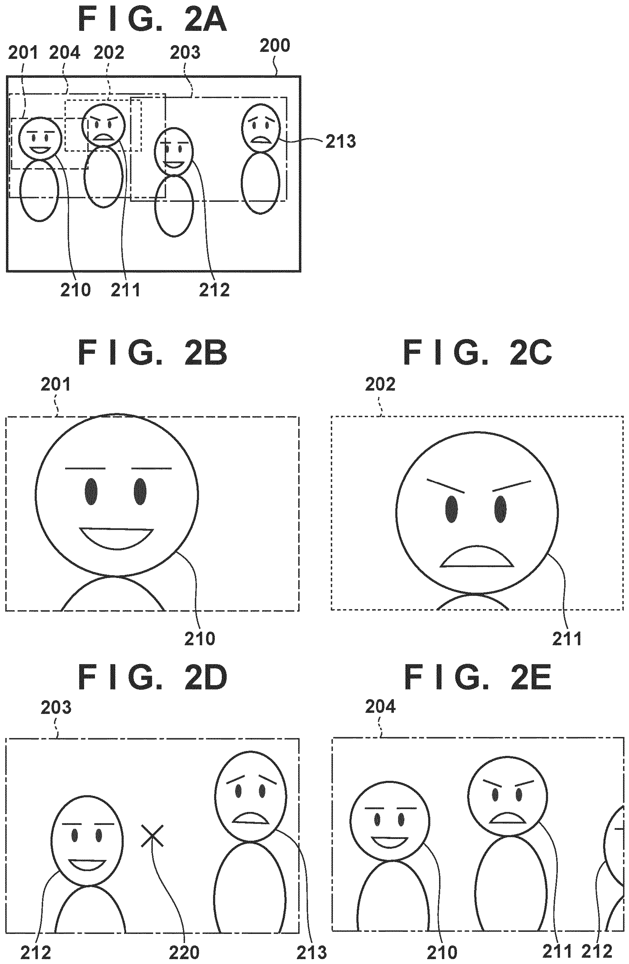

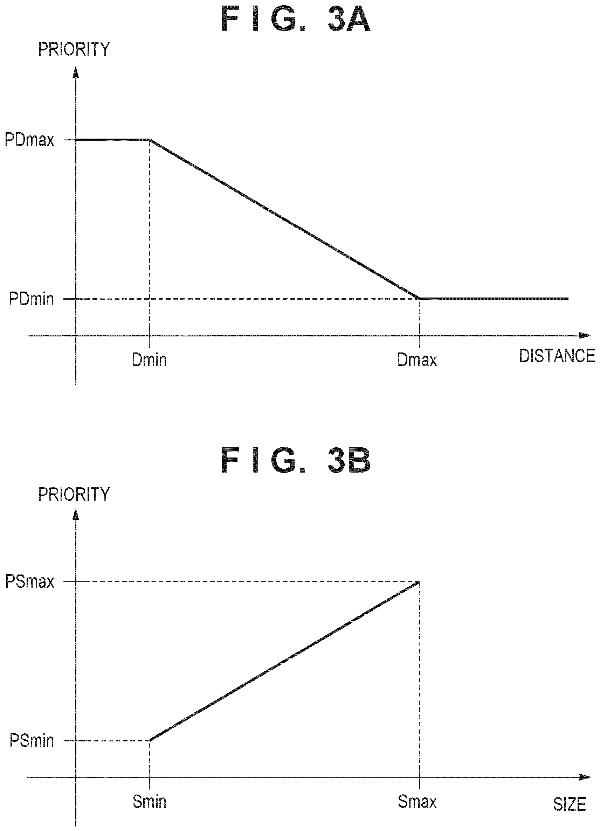

Problems that may occur in the video distribution system described above when processing is performed using the cropping function and the function of adjusting the focus and exposure for the detected subject will be explained using FIGS. 2A to 2E and FIGS. 3A and 3B. Note that the description here assumes that the subject is a human face.

FIGS. 2A to 2E are diagrams illustrating video being shot by the video distribution system and partial areas of the video (hereinafter referred to as "cropped areas").

FIG. 2A shows an image captured by the image capturing apparatus 10, which covers a full-angle area 200, and includes human faces 210, 211, 212, and 213 as subjects. Furthermore, areas 201, 202, 203, and 204 indicate cropped areas (partial areas) that are partially cut out from the full-angle area 200.

FIG. 2B shows video of the cropped area 201, FIG. 2C shows video of the cropped area 202, FIG. 2D shows video of the cropped area 203, and FIG. 2E shows video of the cropped area 204. Further, a mark 220 in FIG. 2D represents the center of the cropped area 203.

For selecting the main subject from the video of the full-angle area 200 shown in FIG. 2A, there is a method of determining the main subject by calculating the priority based on the distance of each detected subject from the center of the screen and the size of the subject. Here, as an example, the method shown in FIGS. 3A and 3B will be described as a priority calculation method.

In FIG. 3A, the horizontal axis represents the distance from the center of the screen to the center of the subject, and the vertical axis represents the priority according to the distance. The priority is constant until the distance to the subject from the center of the screen reaches Dmin, decreases proportionally from Dmin to Dmax, and then becomes a constant again when the distance exceeds Dmax. In other words, the closer the subject is to the center of the screen, the higher the priority is calculated so that the subject can be determined as the main subj ect.

In FIG. 3B, the horizontal axis represents the size of the detected subject, and the vertical axis represents the priority according to the size of the subject. Given that the minimum detectable size is Smin, the priority increases proportionally from Smin to Smax which is the maximum detectable size. In other words, the larger the subject appears in video, the higher the priority is calculated so that the subject can be determined as the main subject.

Then, the value obtained by adding up the above-mentioned priorities corresponding to the distance and size is determined as the priority of each subject, and the subject having the highest priority is determined as the main subj ect.

However, the shape of the graph and Dmin, Dmax, Smin, and Smax in FIGS. 3A and 3B are not limited to them, and a method may be used in which weights are added to the priorities of the distance and size, respectively. Furthermore, information other than distance and size may be taken into consideration.

In the video shown in FIG. 2A, assuming that all faces have the same size, when the priority of the main subject (main face) is calculated based on the above method, it will be understood that the human face 212 has the highest priority and will be determined as the main face. Therefore, in a case where the video distribution system is distributing video of the full-angle area 200 or video of the cropped area 203, the human face 212, which is the main face, exists within the angle of view of the video being distributed, and there is no problem because the focus and exposure are adjusted to the human face 212.

On the other hand, if the video distributed by the video distribution system is video of the cropped area 201 or the cropped area 202, the human face 212, which is the main face, does not exist within the angle of view of the video being distributed, so a situation may occur in which focus or exposure are not properly adjusted to any of the subjects within the angle of view of the video being distributed. Furthermore, in a case where video of the cropped area 204 is distributed, a situation may occur in which focus and exposure are adjusted to the human face 212, which is the main face, partially existing outside of the angle of view of the cropped area 204, and focus and exposure are not adjusted to the human faces 210 and 211 existing within the angle of view of the cropped area 204.

In the following embodiments, main subject selection processing for solving these problems will be described.

### <First Embodiment>

The first embodiment of the present invention will be described below. Note that in the first embodiment, a case will be described in which the video distribution control unit 122 can notify the camera microcomputer 114 of distribution information.

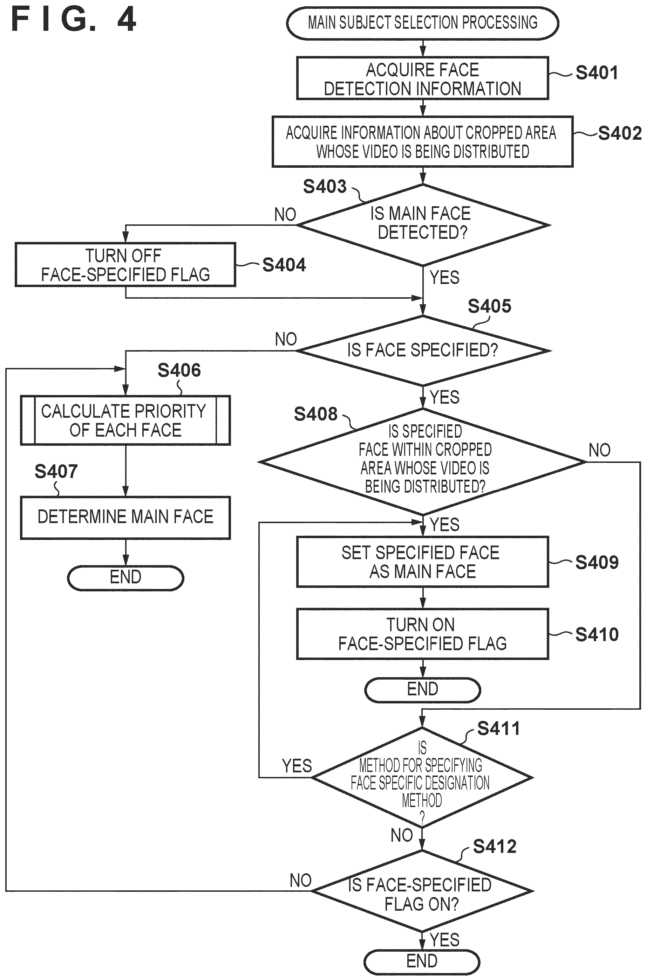

FIG. 4 is a flowchart showing main subject selection processing in the first embodiment, which is performed by the camera microcomputer 114. Note that in the following explanation, a case where the subject is a human face will be explained. However, the subject in the present invention is not limited to a human face, and may be a predetermined subject other than a human face, such as a vehicle or an animal.

When the processing starts, in step S401, based on the detection results obtained by the first subject detection unit 113 and the second subject detection unit 117, the positions and sizes of all faces existing in captured video are determined. At this time, in the example shown in FIGS. 2A to 2E, display unit 109 displays video of the full-angle area 200, and if any of the detected human faces 210 to 213 has been determined as the main face last time, a frame showing the main face is displayed at least.

Next, in step S402, the camera microcomputer 114 acquires information about the cropped area whose video is being distributed by the video distribution control unit 122. Note that the video distribution control unit 122 transmits to the camera microcomputer 114 information regarding one or more cropped areas set by the user through the video distribution apparatus operation unit 121 and information regarding the cropped area of video that is currently being distributed. At this time, a frame indicating the cropped area among the cropped areas 201 to 204 of video that is currently being distributed may be displayed on the display unit 109, superimposed on the video of the full-angle area 200.

Next, in step S403, it is determined whether the previously set main face is included in the faces detected in step S401. If it is determined that the main face is included, the process advances to step S405; if it is determined that the main face is not included, a face-specified flag is turned OFF in step S404, and then the process advances to step S405.

Note that in step S403, if it is determined that the previously set main face is not included in the faces detected in step S401, the face-specified flag is immediately turned OFF; however, the face-specified flag may be kept ON for a predetermined period of time after the main face is lost. For example, even if the main face is temporarily lost, information on the main face may be maintained and the face-specified flag may be kept ON for a predetermined period of time expecting that the main face will be found again. By not changing the focus position during this period of time, it is possible to prevent the focus state from changing frequently and to prevent the appearance of the moving image from deteriorating.

In addition, in a case where the main face is lost, the above-mentioned predetermined period of time may be changed depending on cases where the main face is lost within a specific range of the cropped area (for example, within 90% of the cropped area in the horizontal and vertical directions), and where the main face is lost outside of the specific range of the cropped area (for example, outside of 90% of the cropped area in the horizontal and vertical directions). In that case, for example, the predetermined period of time in the former case may be set to 5 seconds, whereas the predetermined period of time in the latter case may be set to 1 second.

Alternatively, it may be determined whether the user operates the operation unit 118 to cancel the designation of the main face, and if the designation is canceled, the face-specified flag may be turned OFF.

Next, in step S405, it is determined whether a face is specified or not. Here, it is determined whether the user has received an operation for specifying a specific face from the operation unit 118 and/or whether the face-specified flag is ON. If an operation to specify a face is received from the operation unit 118 and/or if the face-specified flag is ON, it is determined that a face is specified, and the process proceeds to step S408. On the other hand, if an operation to specify a face is not received from the operation unit 118 and the face-specified flag is OFF, the process advances to step S406.

Note that the user's designation may be, for example, a touch operation on a touch panel of the display unit 109, or a left/right/up/down designation operation using a cross key or the like. It should be noted that, regarding face selection through the left/right/up/down designation operation, when the camera microcomputer 114 accepts the operation, it is assumed that the face corresponding to the operation direction is specified. Furthermore, if there is no face to be specified in the operation direction, it is assumed that the farthest face in the opposite direction to the operation direction is specified.

In step S408, it is determined whether the face specified by the user is within the video of a cropped area being distributed. If it is determined that the face specified by the user is within the video of the cropped area being distributed, the process advances to step S409, and if it is determined that the face specified by the user is not within the video of the cropped area being distributed, the process advances to step S411.

In step S411, it is determined whether the method for specifying a face by the user is a specific designation method. If it is the specific designation method, the process advances to step S409, and if it is not the specific designation method, the process advances to step S412.

The specific designation method refers to a state in which the user selects a face outside the area with a stronger intention than a state in which a face in the video of the cropped area being distributed is selected. As an example, if the normal method of specifying a face in the video of a cropped area being distributed is a single click of a mouse of the operation unit 118, the specific designation method includes double-clicking, long-pressing, or the like. Furthermore, if a touch panel and the like is used, a single tap may be for the normal method and a double tap or long press operation may be for the specific designation method. Alternatively, it is also possible to drag and drop a specific mark or icon on the screen onto a desired face. In other words, any method may be used as long as the operation is apparent that the face outside the video of the cropped area being distributed is not designated by mistake, but is intentionally designated.

In step S409, the face specified by the user is set as the main face, and then in step S410, the face-specified flag is turned ON, and the processing ends.

In step S412, it is determined whether or not the face-specified flag is ON. Here, the state where the face-specified flag is ON indicates that the main face previously set by the user operation is in the video, and the face specified by the user using the normal specification method is not in the video of the cropped area being distributed or the face has not been specified by the user. In either state, the process ends with the face-specified flag left ON without changing the main face being set. This can reduce the possibility that the main face will change to an unintended face due to an erroneous operation, for example, in a case where the user unintentionally touches the touch panel.

On the other hand, the state where the face-specified flag is OFF in step S412 indicates that the main face previously set by the user's operation is not within the video, and the face specified by the user using the normal specification method is not within the vide of the cropped area being distributed. In this case, the process advances to step S406, and a new main face is determined by the process described above.

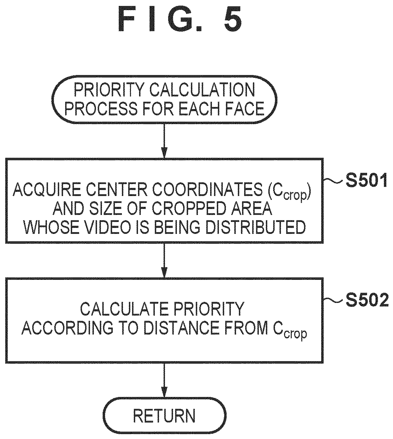

In step S406, a process of calculating the priority of each face is performed. Note that details of the process in step S406 will be described later with reference to FIG. 5.

In the next step S407, the main face is determined and set based on the calculated priority of each face. Specifically, the face with the highest priority is determined as the main face.

Next, the priority calculation process for each face performed in step S406 will be explained using the flowchart of FIG. 5.

First, in step S501, the center coordinates C_{crop} and size of the cropped area whose video is being distributed are acquired.

Next, in step S502, the priority according to the distance from the center coordinates C_{crop} is calculated for all faces existing in the video of the cropped area being distributed.

Through the above processing, if the main face is not set by the user's operation, the main face can be determined from the faces within the cropped area (within the partial area) whose video is being distributed according to the priority. Further, if the main face is set by the user's operation, the currently set main face may be maintained until the user specifies a different main face or the set main face can no longer be detected. Furthermore, if the main face set by the user's operation cannot be detected, the face-specified flag is turned OFF to make it easier to change the subject to be tracked, thereby increasing the probability that the subject within the cropped area will be in focus.

Note that in step S407, the main face is determined based on the priority calculated in step S406, however, if the face currently set as the main face is different from the newly determined main face, instead of immediately switching the main face, the previous main face may be maintained for a predetermined period of time. Thereby, it is possible to prevent the focus position from changing frequently and to suppress deterioration in the appearance of the moving image.

Next, a case where the main face is not specified by the user (the face-specified flag is OFF) in the above process and the video being distributed by the video distribution system is the video of the cropped area 203 is taken as an example and will be specifically explained using FIGS. 2A to 2E.

First, the camera microcomputer 114 acquires information on the positions and sizes of the human faces 210 to 213, which are subjects, from the video of the full-angle area 200 shown in FIG. 2A (step S401).

Next, the video distribution control unit 122 transmits the position information of the center (mark 220) and size information of the cropped area 203 to the camera microcomputer 114 (step S402). The position information of the mark 220 obtained here is the center coordinates C_{crop} in step S501.

Next, the camera microcomputer 114 calculates the priorities of two faces, the human face 212 and the human face 213, existing in the video of the cropped area 203 being distributed, based on the center coordinates C_{crop} (step S502). In the example of FIG. 2D, the sizes of both faces are almost the same, but the human face 212 is closer to the center of the cropped area 203 and the distance from the center coordinates C_{crop} is shorter, so the priority of the human face 212 is higher than that of the human face 213. As a result, the human face 212 is selected as the main face (step S407).

By selecting the human face 212 through the above processing, it is possible to avoid a situation where no subject in the distributed video is in focus.

In the above explanation, in a situation where the main face is the human face 212 in a similar scene (the face-specified flag is ON), if the user presses a left key of a cross key, the human face 211 on the left of the main face of the human face 212 is outside the cropped area 203. Therefore, in the case where a normal operation is performed (NO in step S411), it is explained that the processing ends while maintaining the main face. However, the present invention is not limited to this, and a process described in step S405 in which, in a case where there is no face to be specified in the operation direction, the farthest face in the opposite direction to the operation direction is specified may be used while limiting the range to the cropped area 203. In this case, since the human face 213 on the right in the cropped area 203 is determined to be the designated face, YES is determined in step S408, and the human face 213 is set as the main face.

As described above, according to the first embodiment, in the video distribution system, it is possible to increase the possibility that a subject to which focus and exposure are adjusted exists in the video being distributed.

### <Second Embodiment>

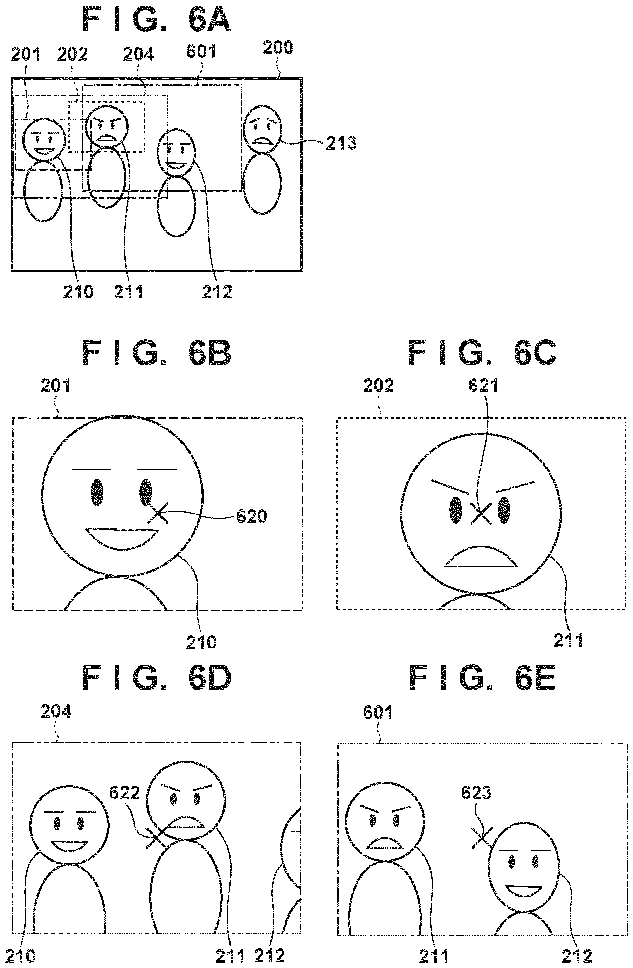

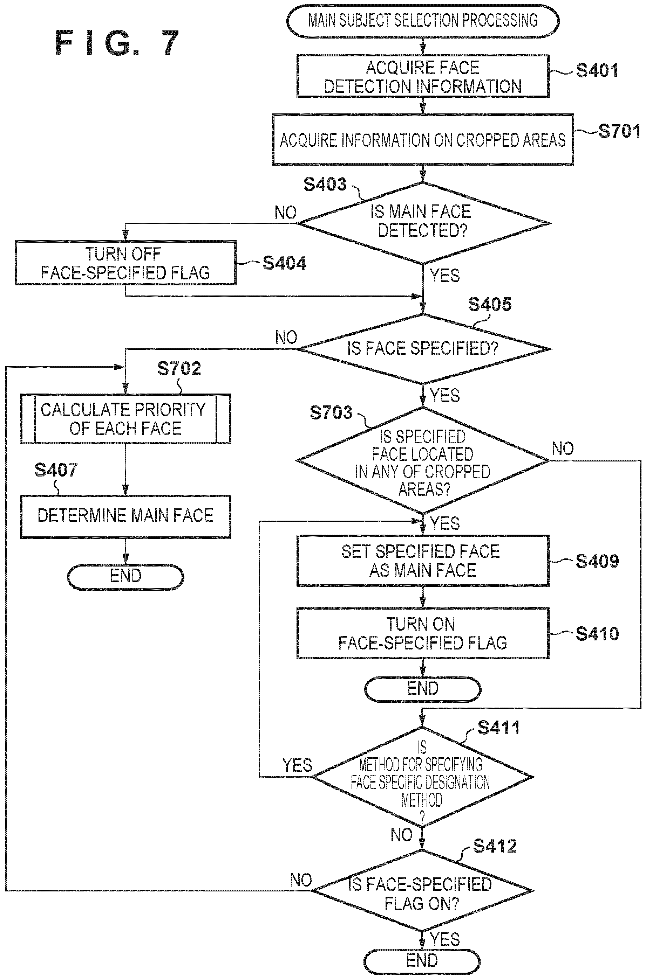

Next, a second embodiment of the present invention will be described. In the second embodiment, a case where the video distribution control unit 122 is unable to notify the camera microcomputer 114 of distribution information will be described using FIGS. 6A to FIG. 8. It should be noted that it is assumed that the video distribution control unit 122 transmits information regarding the cropped area specified by the user through the video distribution apparatus operation unit 121 to the camera microcomputer 114. Note that in FIGS. 6A to 6E and FIG. 7, the same configurations and processes as those shown in FIGS. 2A to 2E and FIG. 4 are given the same reference numerals, and descriptions thereof will be omitted as appropriate.

The processing shown by a flowchart in FIG. 7 is performed by the camera microcomputer 114.

After information on the positions and sizes of faces of all humans in the captured video is acquired in step S401, in step S701, information on all cropped areas set in the video distribution control unit 122 is acquired, and the process advances to step S403. As described above, in the second embodiment, information regarding the cropped area whose video is being distributed cannot be obtained.

After the processes in steps S403 and S404, if it is determined in step S405 that a face is designated, the process advances to step S703, and if it is determined that a face is not designated, the process advances to step S702.

In step S703, it is determined whether the face specified by the user is located in any of the cropped areas obtained in step S701. Note, in step S703, since it is unknown which one of videos of cropped areas the distribution apparatus 12 is distributing, the camera microcomputer 114 determines only whether or not a face within the cropped areas is selected, and then determines whether or not to change the main face.

If it is determined that the specified face is within any of the cropped areas, the process advances to step S409; if it is determined that the specified face is not within any of the cropped areas, the process advances to step S411.

If it is determined in step S411 that the method of specifying the face by the user is not the specific specifying method, and the face-specified flag is determined as OFF in step S412, the process advances to step S702 and a new main face is determined.

In step S702, a process of calculating the priority of each face is performed, and the main face is determined based on the priority of each face calculated in step S407 and set.

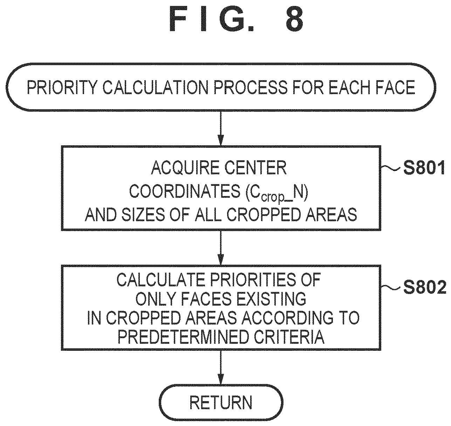

Next, the priority calculation process for each face performed in step S702 will be explained using the flowchart of FIG. 8.

First, in step S801, the center coordinates and sizes of all set cropped areas are acquired. Hereinafter, the center coordinates of the acquired Nth cropped area will be referred to as C_{crop_N}.

Next, in step S802, using the center coordinates and sizes of all the cropped areas obtained in step S801, the priorities of only the faces existing in the cropped areas are calculated according to predetermined criteria.

The priority calculation method in step S802 will be described below with reference to FIGS. 6A to 6E.

FIG. 6A is video of the full-angle area 200 captured by the image capturing apparatus 10, and includes human faces 210, 211, 212, and 213 as subjects. Furthermore, areas 201, 202, 204, and 601 are cropped areas that are partially cut out from the full-angle area 200. Further, marks 620, 621, 622, and 623 in the cropped areas 201, 202, 204, and 601, respectively, represent the center C_{crop_N} of the angle of view of the cropped areas. The coordinates of the mark 620 are denoted by C_{crop_1}, the coordinates of the mark 621 by C_{crop_2}, the coordinates of the mark 622 by C_{crop_3}, and the coordinates of the mark 623 by C_{crop_4}.

FIG. 6B shows video of the cropped area 201, FIG. 6C shows video of the cropped area 202, FIG. 6D shows video of the cropped area 204, and FIG. 6E shows video of the cropped area 601.

### [First Method]

In the first method, based on the distance between each face in any cropped area and the center of the screen, the shorter the distance, the higher the priority.

In the example shown in FIGS. 6A to 6E, among the faces in any of the cropped areas 201, 202, 204, and 601, the human face 212 closest to the center of the screen has the highest priority. As a result, the human face 212 is determined as the main face in step S407.

Note that if the cropped area 601 is not set, among the faces in any of the cropped areas 201, 202, and 204, the human face 211 closest to the center of the screen has the highest priority, and is determined as the main face. The human face 212 or the human face 213 that does not exist in any of the cropped areas 201, 202, and 204 cannot be the main face. Further, if the human face 211 does not exist, the human face 210 has the highest priority and is determined as the main face.

### [Second Method]

In the second method, the priority is calculated based on the distance from the center of the full-angle area 200 to the cropped area C_{crop_N}.

Specifically, first, the center of mass CM of the cropped areas C_{crop_1} to C_{crop_4} is calculated, and the closer to the calculated center of mass CM, the higher the priority.

In addition, in a case of calculating the center of mass CM, by putting more weight on the area cropping a narrower range, the priority of the face existing in the area attracting more attention becomes higher, which increases the possibility that the face is determined as the main face. As an example, a method can be considered in which the distance from the center of the screen to the cropped area C_{crop_N} is multiplied by the reciprocal of the horizontal size of the cropped area. That is, in FIGS. 6A to 6E, the cropped areas 204 and 601 have half the horizontal size of the full angle of view, so they are weighted by 2. Furthermore, since the cropped areas 201 and 202 have a size that is 1/4 of the horizontal size of the full angle of view, they are weighted by 4. That is, if the center coordinates of the full-angle area 200 are C, then the center of mass CM can be found using the following equation (1). CM = (4(C-Ccrop_1)+4(C-Ccrop_2)+2(C-Ccrop_3)+2(C- Ccrop_4))/(4+4+2+2)

By weighted averaging in this way, faces that are magnified at higher magnifications are given higher priority and are more likely to be selected as the main face, increasing the possibility of reducing the sense of discomfort in the video being distributed.

In the examples shown in FIGS. 6A to 6E, among the faces existing in any of the cropped areas 201, 202, 204, and 601, the face of the person closest to the calculated center of mass CM becomes the main face.

### [Third Method]

In the third method, in a case where the user has specified a cropped area along with the main face and the main face goes outside the cropped area (outside the partial area), the priority is set based on the direction in which the main face is exited.

For example, as shown in FIG. 6D, in a case where the human face 211 in the cropped area 202 is specified by the user as the main face, a case where the human face 211 goes out of the frame to the right side of the cropped area 202 (in the direction to the human face 212) is considered. At this time, there is a high possibility that the human face 211 exists in a cropped area on the right side of the cropped area 202 or is facing the cropped area on the right side. Therefore, the possibility of distributing video that does not give unnatural impression is increased by selecting a main subject existing in the cropped area on the right side of the cropped area 202.

In this case, the above purpose can be achieved by setting the priority of a face existing in the direction in which the main face has exited from the frame to be higher than the priority of a face existing in the opposite direction.
Alternatively, in the second determination method described above, the weight of a cropped area existing in the direction in which the main face has exited from the frame may be set greater than the weight of a cropped area existing in the opposite direction.

Further, even if the main face exits the frame of a cropped area as described above, the priority calculation method may be changed depending on whether or not there is another face in the cropped area where the main face was originally present.

For example, a case where the human face 212 in the cropped area 601 shown in FIG. 6E is the main face, and the human face 212 exits the frame of the cropped area 601 to the left (in the direction of the human face 210) at a certain timing is considered. In this case, the priority of a face located in the cropped area where the main face was present is given high priority, and the priority of a face located in the direction in which the main face starts moving is also given high priority. By setting the priority in this way, instead of selecting the main face from among the subjects in the cropped areas 201 and 204, even if a face is detected to the right of the human face 212 in the same cropped area 601, the human face 211 on the left side of the human face 212 is selected as the main face.

As a result, although the area whose video is being distributed is unknown, it is assumed that the possibility that the area where the main face existed will be distributed is high, it is possible to increase the possibility of distributing the video that gives the least unnatural impression.

### [Fourth Method]

In the fourth method, the higher the number of cropped areas to which a face belongs, the higher the priority given to the face.

For example, in the case of FIGS. 6A to 6E, the human face 211 belongs to three areas, the cropped areas 202, 204, and 601, so the priority is set high (e.g., multiplied by 3). Also, the human face 210 belongs to two areas, the cropped areas 201 and 204, so its priority is doubled, for example, and the human face 212 belongs only to the cropped area 601, so its priority is not multiplied, or multiply by 1.

By performing the above processing on the priorities calculated by the first to third determination methods described above for all detected faces, for example, the priority of a face that belongs to a larger number of cropped areas is increased more, which increases the possibility that the face is selected as the main face. This increases the possibility that the main face exists in the cropped area whose video is being distributed, making it possible to increase the possibility of distributing a video that does not gives unnatural impression.

Among the first to fourth methods described above, any determination method may be set in advance or may be selected by the user. In addition, the priority calculation method is not limited to the first to fourth methods, and any determination condition can be adopted as long as it can increase the possibility that the main face exists in the cropped area whose video is being distributed.

### <Other Embodiments>

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A video processing apparatus comprising:
detection means configured to detect a predetermined subject or subjects from video obtained from image capturing means that repeatedly shoots and outputs video;
acquisition means configured to acquire information on at least one partial area set in the video obtained from the image capturing means; and
determination means configured to determine a main subject based on a priority of each subject within the partial area from among the subject or subjects detected by the detection means.

2. The video processing apparatus according to claim 1 further comprising operation means configured to designate a main subject from among the subject or subjects detected by the detection means,
wherein, in a case where a main subject is not designated by the operation means, the determination means determines a main subject.

3. The video processing apparatus according to claim 2, further comprising setting means configured to, in a case where a subject is designated by a predetermined operation by the operation means, set the designated subject as a main subject regardless of whether or not the designated subject is within the partial area.

4. The video processing apparatus according to claim 3, wherein in a case where the designated main subject is not detected by the detection means, the setting means does not change the designated main subject for a predetermined time since the designated main subject is not detected.

5. The video processing apparatus according to any one of claims 1 to 4, wherein the acquisition means acquires information on the partial area whose video is distributed to outside, and
the determination means determines a main subject from a subject or subjects within the partial area whose video is distributed to outside.

6. The video processing apparatus according to claim 5, wherein the determination means sets a higher priority to a subject closer to a center of the partial area whose video is distributed to outside among a subject or subjects in the partial area.

7. The video processing apparatus according to claim 5 or 6, wherein the determination means sets a higher priority to a subject having a larger size in the partial area whose video is distributed to outside.

8. The video processing apparatus according to any one of claims 1 to 4, wherein the determination means sets a higher priority to a subject which is in the partial area and located at a position closer to a center of video captured by the image capturing means.

9. The video processing apparatus according to any one of claims 1 to 4, wherein the determination means sets a higher priority to a subject which is in the partial area and located at a position closer to a center of mass of the partial area or areas.

10. The video processing apparatus according to claim 5, wherein the determination means gives a greater weight to a smaller partial area at a time of obtaining the center of mass of the partial areas.

11. The video processing apparatus according to any one of claims 1 to 4, wherein, in a case where the determined main subject moves and exits from the partial area, the determination means sets a higher priority to a subject in a partial area that is in a moving direction of the main subject, and also sets a higher priority to a subject in the partial area to which the main subject belonged before.

12. The video processing apparatus according to any one of claims 8 to 11, wherein the determination means gives a higher priority to a subject that belongs to a larger number of partial areas.

13. The video processing apparatus according to any one of claims 7 to 12, wherein the determination means sets a higher priority to a subject which is in the partial area and has a larger size.

14. An image capturing apparatus comprising:
the video processing apparatus according to any one of claims 1 to 13; and
the image capturing means that repeatedly shoots and outputs video.

15. The image capturing apparatus according to claim 14 further comprising focus adjustment control means configured to focus on the main subject.

16. The image capturing apparatus according to claim 14 or 15 further comprising exposure control means configured to adjust exposure to the main subj ect.

17. A video distribution system comprising:
setting means configured to set at least one partial area in video shot by the image capturing apparatus according to any one of claims 14 to 16; and
distribution means configured to select and distribute any of the video or the video of the partial area.

18. A video processing method comprising:
a detection step of detecting a predetermined subject from video obtained from image capturing means that repeatedly shoots and outputs video;
an acquisition step of acquiring information on at least one partial area set in the video obtained from the image capturing means; and
a determination step of determining a main subject based on a priority of each subject within the partial area among the subject or subjects detected in the detection step.

19. A program for causing a computer to function as each means of the video processing apparatus according to any one of claims 1 to 13.

20. A computer readable storage medium storing the program according to claim 19.
